Europäisches Patentamt

European Patent Office

Office européen des brevets

(19)

(11) Veröffentlichungsnummer: **0 019 334**
A1

(12) # EUROPÄISCHE PATENTANMELDUNG

(21) Anmeldenummer: 80200423.4

(51) Int. Cl.³: **A 01 C 23/04**

(22) Anmeldetag: 06.05.80

(30) Priorität: 11.05.79 DE 2918963

(43) Veröffentlichungstag der Anmeldung:
26.11.80 Patentblatt 80/24

(84) Benannte Vertragsstaaten:
BE CH DE FR GB IT LI LU NL SE

(71) Anmelder: RUHR-STICKSTOFF AKTIENGESELLSCHAFT
Königsallee 21
D-4630 Bochum 1(DE)

(72) Erfinder: Ucinhazska, Bruno
Johannesstrasse 6
D-4408 Dülmen(DE)

(74) Vertreter: Steil, Hanna, Dipl.-Chem. et al,
RSP PATENTE-PB 40 Holsterhauser Strasse 160
Postfach 2840
D-4690 Herne 2(DE)

(54) **Vorrichtung zum schnellen Wechseln der Arbeitstechnik bei fahrbaren Spritzgeräten.**

(57) Die Vorrichtung besteht aus einer Schnellkupplung (4,5), bei der ein Kupplungsteil (4) als Überwurfmutter gleichzeitig eine Universaldüse (3) und das Vorfilter (2) festhält und direkt mit dem Stutzen der Feldspritzgeräte (1) verbunden wird, während das Gegenstück der Kupplung (5) mit dem jeweiligen Zusatzgerät (6) verbunden ist.

Croydon Printing Company Ltd.

./...

Figur 1

0019334

Bochum, den 27. April 1979

Ruhr-Stickstoff Aktiengesellschaft
Bochum

---

Vorrichtung zum schnellen Wechseln der Arbeitstechnik
bei fahrbaren Spritzgeräten

---

## Beschreibung und Beispiele

Die Erfindung betrifft eine Schnellkupplung, die es bei fahrbaren Feldspritzgeräten ermöglicht, ohne großen Zeitverlust von einer Flüssigkeits-Verteilungsmethode zu einer anderen überzugehen. Bevorzugt betrifft das den Übergang von Arbeiten mit Sprühdüsen zu Arbeitsverfahren mit Hilfe von über Verteilerelemente angeschlossene Schleppschläuche.

Die fahrbaren Feldspritzgeräte konnten sich in der Landwirtschaft aufgrund
der vielseitigen Verwendungsmöglichkeiten bei der Verteilung der verschiedensten Stoffe auf Ackerflächen, der bequemen Handhabung beim Umfüllen und beim Aufbringen auf den Acker und wegen der Einsparung von Lagerraum rasch einführen. Die vielseitigen Einsatzmöglichkeiten bedingen freilich auch die Benutzung verschiedener Ausbringungstechniken, z.B. über Düsen verschiedener Bauart, Tropfrohre, Schleppschläuche usw.

Beim Wechsel von einer Applikationsart zu einer anderen ist gewöhnlich ein zeitaufwendiges umständliches Umrüsten der Spritzbalken erforderlich.

Bekanntlich sind die Gestänge der fahrbaren Feldspritzgeräte je nach Bauart (nach dem Ausschlagen) 10 - 20 m lang. Diese Rohrgestänge, die mit dem Vorratsbehälter der zu verteilenden Flüssigkeit in Verbindung stehen, besitzen Stutzen jeweils im Abstand von 50 cm. Im Regelfall sind diese Stutzen mit Düsen ausgerüstet, die eine gleichmäßige Verteilung der jeweils zu versprühenden Flüssigkeit ermöglichen.

Gegebenenfalls sind zwischen Stutzen und Düse noch ein Kugelventil-Filter und eine Dosierscheibe eingebaut.

Will man von der Düsen-Spritztechnik auf eine Verteilung mit Schleppschläuchen in jeweils 25 cm Abstand umstellen, dann muß man zunächst die Düse ausschrauben. Dabei fallen Dosierscheibe und Ventil-Filter heraus, die vor Ansetzen eines T- oder Y-Stückes mit einer Muffe wieder eingesetzt werden müssen. Gewöhnlich wird man die Schleppschläuche schon vorher an das benutzte Verteilerelement mit Hilfe von Schlauchtüllen und Rohrschellen angesetzt haben.

- 3 -

Entsprechend umständlich sind die Arbeitsgänge bei erneutem Einsatz von anderen Spritzdüsen, z.B. Flachstrahldüsen,oder von Tropfrohren.

Der Erfindung liegt die Aufgabe zugrunde, den Wechsel von einer Anwendungsart zu einer anderen mit geringstem Zeitaufwand und möglichst kostengünstig durchzuführen. Außerdem soll dieser Wechsel für Feldspritzgeräte der verschiedensten Bauart und Herkuft ausgeführt werden können.

Diese Aufgabe wird erfindungsgemäß durch eine besonders ausgestaltete Schnellkupplung gelöst.

Gegenstand der Erfindung ist daher eine Schnellkupplung, bei der ein Kupplungsteil als Überwurfmutter gleichzeitig eine Universaldüse und das Ventil-Filter festhält und direkt mit dem Stutzen der Feldspritzgeräte verbunden wird, während das Gegenstück der Kupplung mit dem jeweiligen Zusatzgerät verbunden ist.

Als Schnellkupplungen kommen alle geeigneten Verbindungsstücke infrage, die stoß- und schlagsichere, rasche Verbindungen gestatten und die den Gegebenheiten am Stutzen der Feldspritzgeräte und den Anbaugeräten angepaßt werden können. Das sind insbesondere alle Arten von Bajonettverschlüssen, Steck- und Einrastkupplungen. Gegebenenfalls kann die Verbindung durch zusätzliche Sicherungseinrichtungen, wie Schrauben, Federn, Schnappverschlüsse u.ä. zusätzlich gesichert werden. Diese Kupplungen können eingebaute Dichtungen enthalten, oder es können zusätzliche Dichtungsringe zwischen die beiden Kupplungsstücke gebracht werden.

0019334

- 4 -

Die Schnellkupplungen können aus allen Materialien hergestellt werden, die korrosionsbeständig gegen die zu verteilenden Flüssigkeiten, insbesondere Pflanzenschutzmittel und Düngerlösungen, sind. Bevorzugt kommen dafür Chromnickelstähle und gehärtete Kunststoffe infrage.

Die Verbindung zwischen dem Stutzen am Feldspritzgerät und dem einen Kupplungsteil erfolgt bevorzugt durch Verschraubung. Gegebenenfalls sind jedoch auch Schlauchverbindungen mit Rohrschellen, Schliffverbindungen mit zusätzlichen Haltevorrichtungen und andere Verbindungsarten möglich.

In analoger Weise ergeben sich die Verbindungen zwischen den Zusatzgeräten und dem Gegenstück der Kupplung. Die Verbindungen der beiden Kupplungsteile mit dem Stutzen des Feldspritzgerätes bzw. der Zusatzgeräte können sowohl gleich als auch verschieden sein.

Als Zusatzgeräte verwendbar sind u.a. Flachstrahldüsen der verschiedensten Bauart, Tropfrohre und Verteilerelemente mit Schleppschläuchen. Während man die Verteilerelemente der Schleppschläuche im allgemeinen direkt mit den Kupplungsstücken wird verbinden können, dürfte es bei den Spezialdüsen und Tropfrohren zweckmäßig sein, diese zunächst mit kurzen Rohrstücken zu versehen und erst dann daran die Gegenstücke der Kupplungselemente anzusetzen. Auch Spezialgeräte mit Rohrverbindungen sind an die Kupplungsstücke montierbar, z.B. Unterblatt-Spritzrohre.

Die Universaldüse, die mit dem anderen Kupplungselement am Stutzen des Feldspritzgerätes eingebaut ist, dient für die Vorsatzgeräte gewissermaßen als Dosiervorrichtung. Gegebenen-

- 5 -

falls kann man jedoch davor noch andere Dosiervorrichtungen setzen, z.B. Kaliberscheiben oder variierbare Verengungseinrichtungen, wie Hähne oder Quetschvorrichtungen.

Im allgemeinen wird man als Düse am Stutzen des Feldspritzgerätes eine von einfacher Bauart verwenden. Gleichzeitig sollte sie möglichst auch diejenige sein, die man ohnehin am häufigsten verwendet.

Ausgebaut wird diese Düse im allgemeinen nur, falls - wider Erwarten - doch einmal Abscheidungen entfernt werden müssen. Gewöhnlich wird man mit einer einmaligen Reinigung der Geräte am Ende der Saison auskommen.

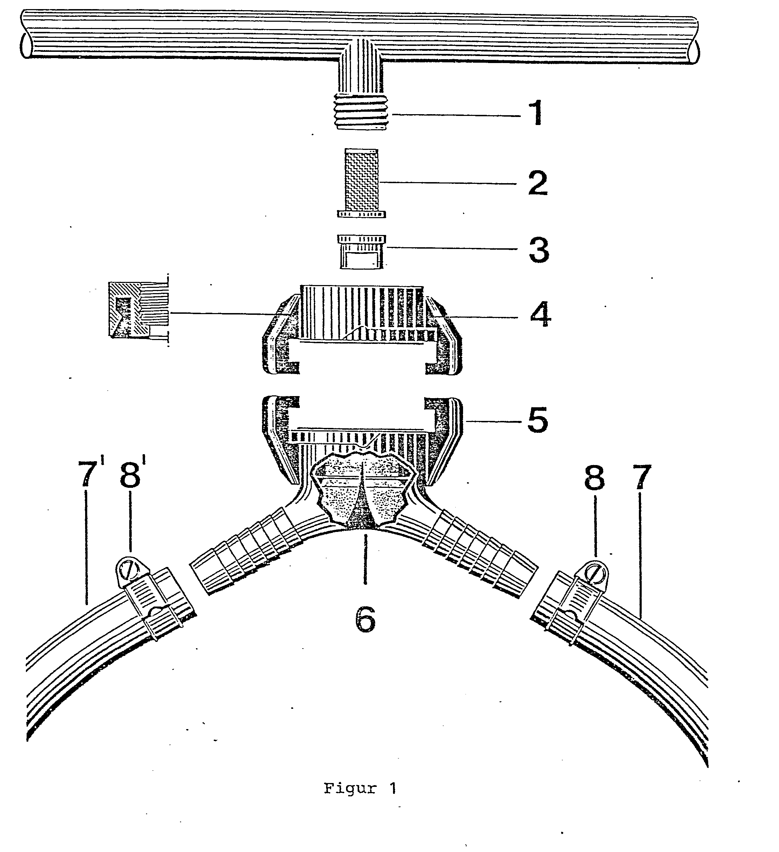

Als Beispiel ist in Figur 1 dargestellt, wie eine Schnellkupplung (4 + 5) mit einem Verteilerelement (6) mit zwei Schleppschläuchen (7 + 7') als Zusatzgerät mit dem mit einem Ventil-Filter (2) und einer Universaldüse (3) ausgerüsteten Stutzen (1) eines Feldspritzgerätes verbunden ist. Im Beispiel sind die Schleppschläuche durch Rohrschellen (8 + 8') an den beiden Tüllen des Verteilerelementes (6) befestigt. Es kann jedoch auch jede andere Verbindungsart gewählt werden. Nicht dargestellt sind in der Zeichnung mögliche zusätzliche Abstandshalter für die Schleppschläuche.

Anstelle der in der Zeichnung dargestellten Form der Schnellkupplungen können auch andere Arten verwendet werden. Auch die in der Figur 1 dargestellte Primärdüse ist gegen andere Düsen austauschbar, und anstelle des Verteilerelements mit Schleppschläuchen können die bereits genannten oder andere Zusatzgeräte verwendet werden.

- 6 -

Durch den Einsatz der erfindungsgemäßen Schnellkupplungen an den Stutzen der Feldspritzgeräte bzw. den verschiedenen Anbaugeräten ergibt sich neben den verschiedenen arbeitswirtschaftlichen Vorteilen auch eine Verbilligung der Umrüstung. Das Verfahren der Getreidespätdüngung mit Ammonnitrat-Harnstoff-Lösung kann ohne Zeitaufwand nach oder gegebenenfalls vor weiteren Maßnahmen zur Verteilung von Pflanzenschutzmitteln durchgeführt werden.

Der Wechsel von einer Applikationsart zur anderen kann erfindungsgemäß völlig unkompliziert bei jedem Feldspritzgerät am Feldrand unmittelbar vor Beginn der Spritzarbeiten vorgenommen werden. Ebenso leicht läßt sich auch der Abbau vornehmen.

Bochum, den 27. April 1979

Ruhr-Stickstoff Aktiengesellschaft
Bochum

---

Vorrichtung zum schnellen Wechseln der Arbeitsweise
bei fahrbaren Spritzgeräten

---

## Patentansprüche

1. Vorrichtung zum schnellen Wechseln der Arbeitstechnik bei fahrbaren Feldspritzgeräten, g e k e n n - z e i c h n e t durch eine Schnellkupplung, bei der ein Kupplungsteil (4) als Überwurfmutter gleichzeitig eine Universaldüse (3) und das Vorfilter (2) festhält und direkt mit dem Stutzen der Feldspritzgeräte (1) verbunden wird, während das Gegenstück der Kupplung (5) mit dem jeweiligen Zusatzgerät verbunden ist.

2. Vorrichtung nach Anspruch 1, g e k e n n z e i c h n e t durch die Ausrüstung des Gegenstücks (5) mit einer Spezialdüse, wie einer Flachstrahl-Düse, als Zusatzgerät.

3. Vorrichtung nach Anspruch 1, g e k e n n z e i c h n e t durch die Ausrüstung des Gegenstücks (5) mit einem Tropfrohr als Zusatzgerät.

0019334

4. Vorrichtung nach Anspruch 1, g e k e n n z e i c h n e t durch die Ausrüstung des Gegenstücks (5) mit einem Verteilerelement (6) mit 2 - 5 Schleppschläuchen als Zusatzgerät.

5. Vorrichtung nach Anspruch 1, g e k e n n z e i c h n e t durch die Ausrüstung des Gegenstücks (5) mit einem Unterblatt-Spritzrohr als Zusatzgerät.

dr.wu.-wi

1/1

Figur 1

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - U1 - 7 836 815 (RUHR-STICKSTOFF) <br> * Seite 3, Zeilen 26 bis 28; Fig. 1 * <br> -- | 1 |
| P | DE - U1 - 7 919 779 (D. IHSEN) <br> * Anspruch 1; Seite 3, Zeilen 13 bis <br> 25; Fig. 2 * <br> -- | 1,4 |
| A | DE - U - 1 826 843 (A. JAKOB) <br> * ganze Schrift * <br> ---- | |

**KLASSIFIKATION DER ANMELDUNG (Int.Cl.3)**

A 01 C 23/04

**RECHERCHIERTE SACHGEBIETE (Int. Cl.3)**

A 01 C 23/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 26-06-1980 | SCHLABBACH |

EPA form 1503.1   03.78